# EUROPEAN PATENT APPLICATION

(11) **EP 2 383 994 A1**
(43) Date of publication of application: **02.11.2011**
(21) Application number: 09838056.1
(22) Date of filing: 24.07.2009
(51) Int. Cl.: H04N 7/14

(54) **MOBILE TV PROGRAM MANAGEMENT METHOD AND SYSTEM**

(30) Priority: 30.12.2008 CN 200810189284
(71) Applicant: ZTE Corporation, Shenzhen, Guangdong 518057 (CN)
(72) Inventor: ZHOU, Yang, Shenzhen Guangdong 518057 (CN); YIN, Zhuan, Shenzhen Guangdong 518057 (CN); WU, Huaiqin, Shenzhen Guangdong 518057 (CN); HUI, Yi, Shenzhen Guangdong 518057 (CN)
(74) Representative: Vossius & Partner
(86) International application number: PCT/CN2009/000831
(87) International publication number: WO 2010/081269

(57) **Abstract**

A mobile TV program management method and system are provided in the present invention, wherein the method is implemented based on a mobile phone and a program reservation server, and the management method comprises the following steps of: (a) the mobile phone sending a request including a program index set by a user to the program reservation server; (b) the program reservation server receiving the request, and searching for matched programs in a TV program menu according to the program index set by the user; (c) the program reservation server sending a search result to the mobile phone so that the user of the mobile phone can know about program information related with the program index that has been set. By applying the method and system in the present invention, the service of program information can be more flexible and personalized.

## Description

### Technical Field

The present invention relates to the field of broadcast TV and the field of mobile communication, and in particular, to a mobile TV program management method and system.

### Background Art

During Beijing Olympic Games, many "sports fans" who cannot watch games before a TV turned to a mobile TV, leading to a climax of mobile TV application. China Mobile purchased forty thousand TD-SCDMA (Time Division-Synchronous Code Division Multiple Access) mobile phones that support mobile TV for Olympic volunteers; meanwhile, General Bureau of Radio, Film and Television also rented mobile phones having TV function to the public for free. It can be seen from the market response of mobile TV trial that mobile TV application will become a new function light spot of a mobile terminal, and many value-added services depending on mobile TV, such as guessing activities, traveling and shopping, and information query, will also be developed.

Due to limitation of the resources of the mobile terminal, the screen for watching TV on a mobile phone is very small, and the duration time should not be too long. Therefore, a user usually selectively watches some programs when watching TV on a mobile phone.

However, in order to know about the program schedule, a user needs to leaf through the downloaded electronic program guides, and probably still cannot find out his favorite program after leafing through the electronic program guides due to particularity of personal preference of the user, thus wasting a lot of time. Moreover, even if the user finds out his favorite or desirable program, the user may still wish to be reminded before the program is broadcast. If the user knows in advance the accurate broadcasting time of the program that he is going to watch, an alarm clock can be set to remind the user to watch the program. However, the function of an alarm clock is relatively simple, and for some programs whose broadcasting rules are rather complicated, it may be unable to set an alarm clock. Moreover, the actual broadcasting times of many programs may be not very accurate or they do not have any specific broadcasting time currently. In this case, an alarm clock will be unhelpful. In addition, for some critical events and public alarms, the government and operator also need a means to voluntarily remind the user to watch them.

### Summary of the Invention

The technical problem to be solved in the present invention is to provide a mobile TV program management method and system so as to make the service of program information more flexible and personalized.

In order to solve the above problem, the present invention provides a mobile TV program management method implemented based on a mobile phone and a program reservation server, comprising the following steps of:
(a) a mobile phone sending a request including a program index set by a user to a program reservation server;
(b) the program reservation server receiving the request, and searching for matched programs in a TV program menu according to the program index set by the user; and
(c) the program reservation server sending a search result to the mobile phone so that the user of the mobile phone can know about program information related with the program index that has been set.

Furthermore, the request in said step (a) is a program search request, the program index set by the user is one or more key words, and the program reservation server support fuzzy inquiry;
the method further comprises the following steps after said step (c):
(d) after receiving the search result, the mobile phone selecting from programs in the search result and sending a program reservation request to the program reservation server;
(e) after receiving the program reservation request, the program reservation server sending a reservation success prompting message, and establishing a program reservation record including corresponding relationship between a user identifier and program information reserved by the user, wherein the program information reserved by the user is a program selected by the user from the search result;
(f) the program reservation server matching a TV program related with the program reservation record according to the TV program menu; and
(g) the program reservation server sending a program broadcasting reminding message to the mobile phone with a corresponding user identifier according to the program reservation record before the matched TV program is broadcast.

Furthermore, the request in said step (a) may be a program reservation request, the program index set by the user is one or more key words, and the program reservation server supports fuzzy inquiry;
in said step (c), the program reservation server also sends a reservation information confirmation request to the mobile phone;
the method further comprises the following steps after step (c):
(d) after receiving the reservation information confirmation request, the mobile phone sending a reservation information confirmation message to the program reservation server;
(e) after receiving the reservation information confirmation message, the program reservation server establishing a program reservation record including corresponding relationship between a user identifier and program information reserved by the user, wherein the program information reserved by the user is a program selected by the user from the search result or a program index set by the user;
(f) the program reservation server matching a TV program related with the program reservation record according to the TV program menu; and
(g) the program reservation server sending a program broadcasting reminding message to the mobile phone with a corresponding user identifier according to the program reservation record before the matched TV program is broadcast.

Furthermore, in said step (e), after the program reservation record is established, the program reservation server inquires and cancels the program reservation record according to the request of the mobile phone.

Furthermore, the step (f) further comprises the following steps of:
(f1) the program reservation server periodically inquiring a list of programs to be broadcast immediately in the TV program menu;
(f2) the program reservation server inquiring for full scan the program reservation record matched with the list of programs to be broadcast immediately; and
(f3) the program reservation server generating a program broadcasting reminding message in accordance with the matched program reservation record.

Furthermore, in said step (f3), the generated program broadcasting reminding message is stored in a timed sending table, and the reminding message includes a reminding time which is set by the user or a system.

Furthermore, the step (g) further comprises: (g1) the program reservation server periodically fully scanning the timed sending table and searching out all program reservation records whose reminding times are before the current time; (g2) the program reservation server sending the reminding message to a mobile phone with a corresponding user identifier.

Furthermore, the TV program menu is a latest TV program menu obtained by the program reservation server through periodically visiting a service guide server.

To solve the above technical problem, the present invention also provides a program reservation module used in a mobile TV program management system, wherein the program reservation module is configured to send a request to a reservation relationship management module of a program reservation server, and to receive and display a search result returned by the reservation relationship management module, and the request includes a program index set by a user.

Furthermore, the request sent by the program reservation module to the reservation relationship management module of the program reservation server is a program search request or a program reservation request;
the program reservation request includes reserved program information, which is a program selected by the user from the search result or the program index set by the user;
the program reservation module is also used to send a reservation confirmation message to the reservation relationship management module.

Furthermore, the program reservation module is also used to send a program reservation inquiry or cancellation request to the reservation relationship management module, and receive and display inquiry or cancellation result returned by the reservation relationship management module.

To solve the above problem, the present invention also provides a program reservation server used in mobile TV program management system, the program reservation server being disposed at a serving side and comprising a reservation relationship management module, a program, broadcasting reminding engine and a message sending module; wherein,
the reservation relationship management module is configured to receive a request sent by the program reservation module, search for desirable programs according to the program index in the request, and return search result to the program reservation module;
the reservation relationship management module is also configured to send a reservation information confirmation request, receive reservation information confirmation message from the program reservation module, and establish and store a program reservation record according to reserved program information;
the program broadcasting reminding engine is configured to periodically inquire a list of programs to be broadcast immediately, search for through full scan program reservation records in a program reservation management module matched with the list of programs to be broadcast immediately, and generate a program broadcasting reminding message in accordance with the matched program reservation record;
the message sending module is configured to send a reminding message to a mobile phone with a corresponding user identifier.

Furthermore, the reservation relationship management module is further configured to receive the program reservation inquiry request send by the program reservation module, return inquiry result after inquiring the stored program reservation records, and receive the program reservation cancellation request sent by the program reservation module, delete the program reservation records to which the cancellation request is directed, and return the cancellation result.

Furthermore, the program broadcasting reminding engine is configured to store the generated program broadcasting reminding message in a timed sending table of the message sending module, the reminding message including a reminding time which is set by a user or a system;
the message sending module is used to periodically fully scan the timed sending table, search out all program reservation records whose reminding times are before the current time, and send a reminding message to a mobile phone with a corresponding user identifier through a short message center.

In the method and system of the present invention, a request is sent from the mobile phone side to the reservation relationship management module at the serving side, the process of searching and matching a program index is carried out at the serving side, and program information related with the user's requirement is directly fed back to the user, thus making the service of program information more flexible and personalized, allowing further selecting reservation at the mobile phone side and storing a program reservation relationship in the program reservation server for the user to inquire and modify.

### Brief Description of the Drawings

FIG. 1 shows the position of a program reservation server in the current mobile CMMB system.
FIG. 2 illustrates the structure and data streams of the mobile TV program management system of the present invention.
FIG. 3 is a sequence chart of the process of establishing a program reservation according to the management method of the present invention.

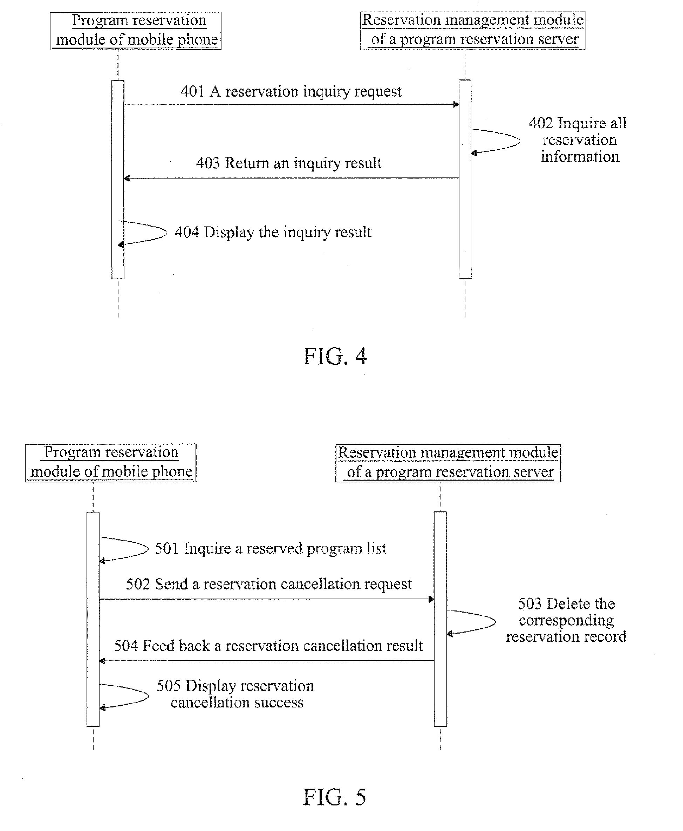

FIG. 4 is a sequence chart of the process of inquiring reserved programs according to the management method of the present invention.
FIG. 5 is a sequence chart of the process of canceling reserved programs according to the management method of the present invention.
FIG. 6 is a flow chart of the program broadcasting advanced reminding engine according to the management method of the present invention.
FIG. 7 is a flow chart for processing a PUSH short message according to the management method of the present invention.

### Referred Embodiments of the Invention

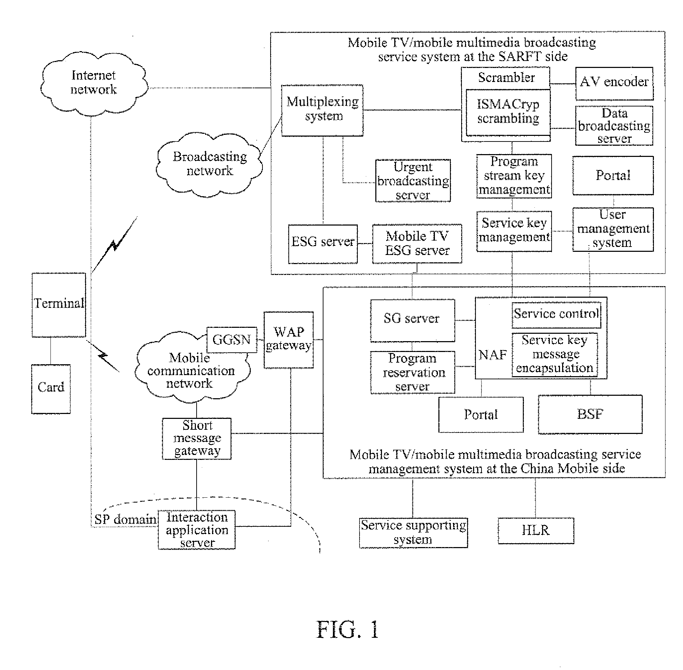

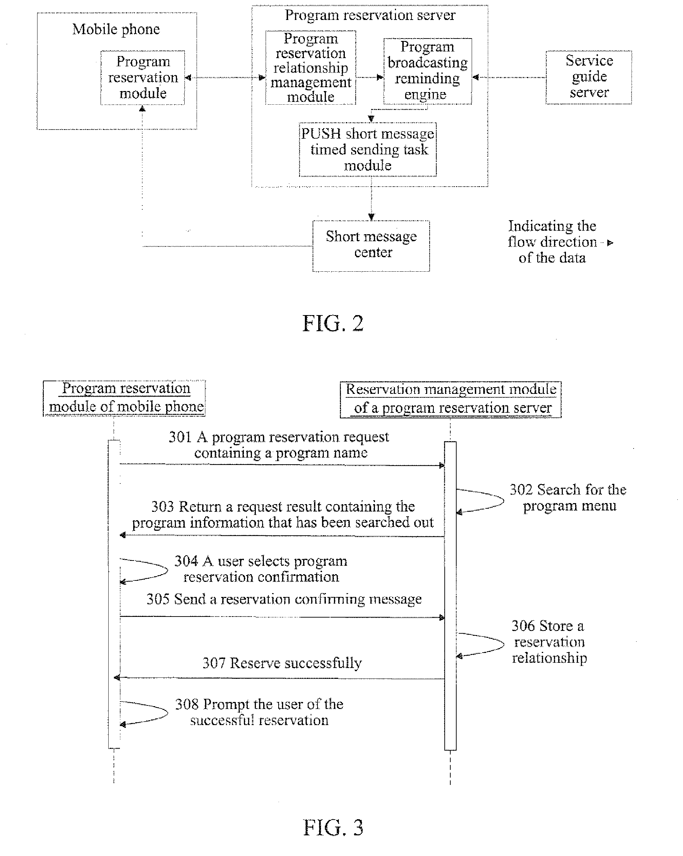

As shown in FIG. 2, the mobile TV program management system of the present invention comprises a program reservation module disposed in a mobile terminal and a program reservation server in a mobile communication network, wherein, the position of the program reservation server in the current mobile CMMB system is as shown in FIG.1, comprising: a program reservation management module, a program broadcasting reminding engine and a PUSH short message timed sending module. The program reservation module in the mobile phone and the program reservation management module in the server communicate with each other through a mobile communication network.

The program reservation module is responsible for acquiring program information, specifically embodied as sending a request to a reservation relationship management module of the program reservation server, receiving and displaying a search result returned by the reservation relationship management module, wherein the request includes a program index set by a user;

the program reservation module is also responsible for implementing program reservation reminding, specifically embodied as reminding the user of whether to confirm the reservation and set an advanced reminding time according to the search result, and sending a reservation confirming request to the reservation relationship management module according to the user's selection, the reservation confirming request including reserved program information and a reminding time set by the user; the reserved program information is a program selected by the user from the search result or a program index set by the user;

the program, reservation module is also used to send a program reservation inquiry or cancellation request to the reservation relationship management module according to the user's requirements, and to receive an inquiry or cancellation result returned by the reservation relationship management module.

The reservation relationship management module is used to receive a request sent by the program reservation module, search for the desirable TV programs according to the program index in the request, and return a search result to the program reservation module; it is also used to receive the reservation confirming request and establish and store a program reservation record according to the reserved program information; the program reservation record records different contents according to different situations:
when no desirable TV program is searched out or they are searched out but the user does not specifically select any one of them to confirm reservation, the user identifier, program index and the reminding time are recorded; in this case, the recorded reservation relationship can ensure that the user can still obtain a corresponding reminding when the TV program has changed.

When the user confirms reservation according to the TV programs in the search result, then the user identifier, the program ID and the reminding time are recorded.

The reservation relationship management module is also used to receive a program reservation inquiry request sent by the program reservation module, return a search result after searching stored program reservation records, receive a program reservation cancellation request sent by the program reservation module, delete a program reservation record to which the cancellation request is directed and return a cancellation result.

The program broadcasting reminding engine is used to periodically obtain the latest TV program menu from a service guide server, periodically inquire a list of programs to be broadcast immediately, search for through full scan program reservation records in a program reservation management module matched with the list of programs to be broadcast immediately, and generate a program broadcasting reminding message for a matched program reservation record; store the generated program broadcasting reminding message in a timed sending table of the message sending module, the reminding message including a reminding time which is set by a user or a system;
the TV program menu used in the reservation relationship management module may be shared with the program broadcasting reminding engine, or may be acquired from the program broadcasting reminding engine.

Both the reservation relationship management module and the program broadcasting reminding engine support fuzzy inquiry with a plurality of key words that are logically related, and the search result includes program ID, program name, program introduction, broadcasting time and one or more of the broadcasting channels.

The PUSH short message timed sending task module (the message sending module for short) is used to periodically fully scan the timed sending table, search out all program reservation records whose reminding times are before the current time, and send a reminding message to a mobile phone with a corresponding user identifier through a short message center.

Based on the above system, the mobile TV program management method of the present invention comprises four functional methods: respectively of program information acquisition, program reservation and reminding, reserved program inquiry and program reservation cancellation, which will be described below in detail with reference to the drawings.

Program information acquisition is not a premise of establishment of a program reservation, but establishment of a program reservation is a premise of reserved program broadcasting reminding, reserved program inquiry and reserved programs cancellation.

Establishment of a program reservation will be described below in detail with reference to the drawings.

### Establishment of a program reservation

As shown in FIG. 3, the process of establishing a program reservation can be implemented using TCP/IP protocol through the following steps in detail:
Step 301: a user enters the program name Name to be reserved on the interface of the program reservation module, the mobile phone sends a reservation request to the reservation relationship management module in the program reservation server through a mobile communication network, wherein the request includes the program name Name entered by the user;
   the program name supports a plurality of key words connected with "AND" or "OR" for fuzzy inquiry.
Step 302: the program reservation management module at the serving side receives the program name Name for which the user requests to reserve, and searches for a list of programs whose names include Name from the TV program menu according to the requested program name;
   Search supports fuzzy matching with the following conditions: 1. the broadcasting time is after the current time; 2. the program name includes Name. If the program name requested by the user uses Name1 AND Name2, the search condition is that the program name includes both Name1 and Name2; if the programs name requested by the user is Name1 OR Name2, then the search condition is that the program name includes either Name or Naive2.
Step 303: the program reservation management module feeds the search result back to the mobile phone;
   if no program is searched out, then it is shown in the returned result for the user that there is not desirable program; if programs are searched out, then the returned result includes all program IDs, program names, program introductions, broadcasting times and broadcasting channels that have been searched out.
Step 304: the mobile phone receives and displays the search result, the user sets an advanced reminding time T, and confirms the reservation;

In this step, reservation confirmation can be implemented in the following two cases:
the first case: reservation is confirmed for a certain program in the search result;
the second case: if there is no matched program or there are matched programs but the user does not specifically select any one of them, reservation is confirmed for the program names required to be reserved entered by the user in step 301.

The advanced reminding time T entered by the user is required to be less than the Maximum reminding time Tₘₐₓ, which is agreed by the mobile phone side and the serving side in the local system and can be set as 30 minutes.

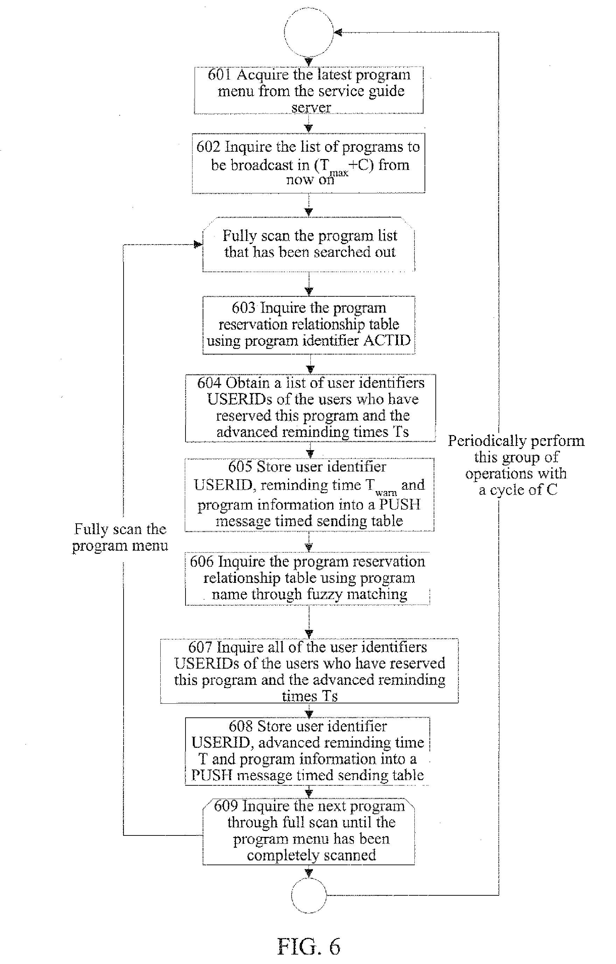

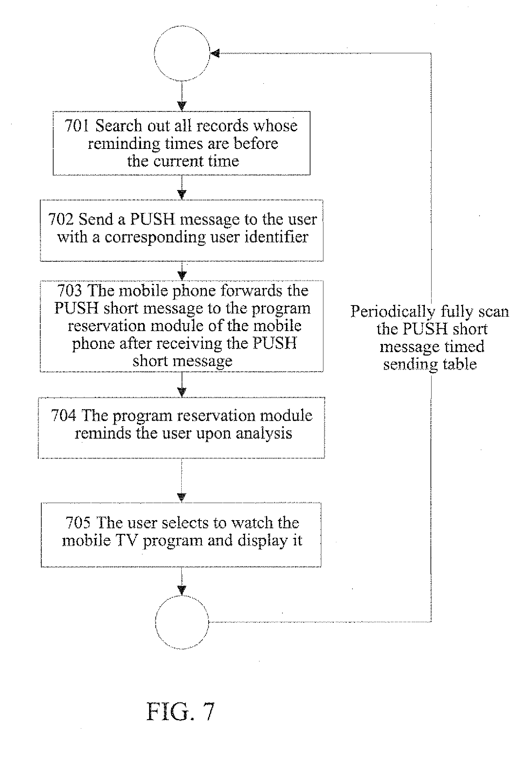

As for entering a reminding time, it is intended to achieve subsequent program reservation reminding, which is shown in FIG. 6 and FIG. 7 in detail. Of course, the reminding time can also be set uniformly by the program reservation server, or a default reminding time (for example, 3 minutes in advance) is adopted to implement reminding.

Step 305: the mobile phone sends a reservation confirmation request to the serving side, wherein the request includes program identifier ACTID, program name and advanced reminding time T;
Step 306: the program reservation management module at the serving side receives the user's reservation confirmation request;
Step 307: the program reservation management module at the serving side obtaining the user identifier USERID, and combining the program identifier ACTID (or program name Name), user identifier USERID and advanced reminding time T into one program reservation record and storing it;

Specifically speaking, in the first case as described above, the stored program reservation record includes user identifier, program identifier and advanced reminding time T.

In the second case as described above, the stored program reservation record includes user identifier, the program name required to be reserved entered by the user in step 301 and the advanced reminding time T.

In the second case, efficient reservation and reservation reminding can be achieved for a program that is likely to be broadcast in the future but does not have a specific broadcasting time yet.

Step 308: the mobile phone receives a reservation success message, and displays it to the user.

The above process of establishing a program reservation also involves a process of acquiring program information, which is specifically shown in step 301 to step 304, wherein, in step 301 the program name Name required to be reserved entered by the user can also be called as a program index for reflecting a user's demand, and the request including the program index is called as a program information acquiring request; in step 302, the program reservation management module searches for a list of TV programs according to the program index; in step 303, the program reservation management module returns a search result to the program reservation module of the mobile phone; in step 304, the program reservation module of the mobile phone displays the desirable program information to the user, thus achieving the purpose of acquiring program information.

### Program reservation inquiry

The process of program reservation inquiry specifically comprises the following steps in detain,
Step 401: the mobile phone sends a reservation inquiry request to the program reservation management module at the serving side;
Step 402: after receiving the inquiry request, the program reservation management module at the serving side acquires the user identifier, and inquires all the reservation information of the user in the reservation relationship table according to the user identifier;

The user identifier is the mobile phone number of the user.

Step 403: the program reservation management module feeds the search result back to the mobile phone;

The search result is a list of the programs reserved by the user, including program name Name, program identifier ACID and advanced reminding time T.

Step 404: the mobile phone displays the list of reserved programs after receiving it.

### Program reservation cancellation

The process of program reservation cancellation includes the following steps in detail:
Step 501: search for the list of programs reserved by the user through steps from 401 to 402;
Step 502: select the reserved programs to be cancelled, send a reservation cancellation request to the reservation management module at the serving side, wherein the request includes the reserved program name Name, program identifier ACID and advanced reminding time;
Step 503: upon receiving the reservation cancellation request, the program reservation management module deletes the reservation record from the program reservation relationship table according to the user identifier USERID, program name Name, program identifier ACTID and advanced reminding time T;
Step 504: the program reservation management module feeds a user reservation cancellation result back to the mobile phone;
Step 505: the mobile phone displays a reservation cancellation success message to the user after receiving it.

### Program broadcasting reminding

The program broadcasting reminding engine is the core function of the system, and as shown in FIG. 6, it is specifically carried out through the following steps:
Step 601: the program broadcasting reminding engine regularly starts, periodically visits the service guide server to acquire the latest program menu from the service guide server;

The program broadcasting reminding engine periodically visits the service guide server in a cycle of C, whose value is recommended as more than 10 minutes and less than Tₘₐₓ. 10 minutes is an empirical value, within the period of which a user generally does not need to be reminded again for the program that is about to be broadcast. Functionally speaking, the shorter the cycle is, the better, but a balance with the operating performance of the server is required.

Step 602: search for the list of programs to be broadcast in (Tₘₐₓ+C) from now on in the program menu;

Step 603: search out each program in the program list through full scan, obtaining the program identifier ACTID of each program, and inquiring the program reservation relationship table in the program reservation management module according to the program identifier;

Step 604: obtaining all user identifiers USERIDs that have reserved this program and the advanced reminding times Ts, subtracting the advanced reminding time T from the broadcasting time of the program to calculate the program reminding time T_{warn};

Step 605: stores the program name, broadcasting channel, user identifier and reminding time T_{warn} into a PUSH short message timed sending table, wherein before they are stored, it needs to judge whether there is a repeated record according to the program identifier ACTID and user identifier USERID, and they are stored only if there is no repeated record so as to avoid repeated reminding.

Step 606: take the program name of the program, and inquire the program reservation relationship table in the program reservation processing module;

Program name inquiry supports fuzzy matching, and the method is as follows:
if the name of the program reserved by the user is Name, then the method for inquiry is that the program name includes Name;
if the name of the program reserved by the user is Name1 AND Name2, then the method for inquiry is that the program name includes both Name1 and Naive2;
if the name of the program reserved by the user is Name1 OR Name2, then the method for inquiry is that the program name includes either Name1 or Name2.

Depending on the practical situation, it can also be extended to support more complicated logic fuzzy inquiry.

Step 607: obtain all user identifiers USERIDs that have reserved this program and the advanced reminding times Ts, subtracting the advanced reminding time T from the broadcasting time of the program to calculate the program reminding time T_{warn};

Step 608: store the program name, broadcasting channel, user identifier and reminding time T_{warn} into a PUSH short message timed sending table, wherein before they are stored, it needs to judge whether there is a repeated record according to the program identifier ACTID and user identifier USERID, and they are stored only if there is no repeated record.

As for one program, inquiry is made using program name and program identifier respectively, corresponding to establishing reservation relationship using program name and program identifier, thus ensuring that no reservation information will be omitted, but there is no absolute sequence between inquiry using program name and inquiry using program identifier.

Step 609: obtain the next program in the list of programs to be broadcast immediately, and skip back to step 603, if full scan for the list of programs is completed, the operation of this round is over, wait for the next timed starting, and execute step 601.

As for critical events and public alarms, the program reservation relationship table can be skipped, and the program name, broadcasting channel, reminding time and all user identifiers within the network are directly formed into a PUSH short message and stored in a PUSH short message timed sending table, and the PUSH short message timed sending task module will send a PUSH short message to all users to remind the users to watch it.

The processing process of a program reservation reminding using a PUSH short message is as follows:
Step 701: the PUSH short message timed sending task module regularly inquires by full scan the PUSH short message timed sending table, and search out all records whose reminding times are before the current time;

The cycle of the regular scan should not be longer than the accuracy of the program reminding time, for example, if the reminding time is accurate to minute, then the cycle of the regular scan is required to be no more than 1 minute. There also should be a balance between the cycle of regular scan and the operating performance of the server.

Step 702: send a PUSH message to all users with the corresponding user identifiers through a short message center;

The PUSH short message includes the program name and broadcasting channel. Please refer to SMS protocol and WAP/SMS PUSH short message protocol for the composition of the PUSH message. After the PUSH message is successfully sent, this PUSH short message timed reminding record is deleted.

Step 703: after the mobile phone receives the PUSH short message, if it analyzes out that it is a mobile TV PUSH short message, it forwards the PUSH short message to the program reservation module of the mobile phone;

Step 704: the program reservation module analyzes out the program name and broadcasting channel from the PUSH short message, and prompts the user of "XX program is going to be broadcast on XX channel, watch it now?";

Step 705: if the user selects No, the mobile phone turns back to the last interface, and the flow ends; if the user selects Yes, the mobile phone automatically starts the mobile TV broadcasting module, directly connects to the channel in the PUSH short message so as to make the user watch the program.

The technical problem to be solved in the present invention is to provide method and system that allow a user to reserve a mobile TV program without having to know the specific broadcasting time of the program, or even the specific name of the program, and after a user reserves a certain program, the system will remind the user to watch it before the program is broadcast.

In order to achieve the purpose of program reservation and reminding, in the above processes, the process of interaction between the program reservation module of the mobile phone and the program reservation relationship management module of the program reservation server can also be simplified by omitting the processes of searching and reservation confirmation in steps from 302 to 305, but directly establishing a program reservation record, thereby making the user's operation more simple.

In the method and system of the present invention, a request is sent from the mobile phone side to the reservation relationship management module at the serving side, the process of searching and matching a program index is carried out at the serving side, and program information related with the user's requirement is directly fed back to the user, thus making the service of program information more flexible and personalized, allowing further selecting reservation at the mobile phone side and storing a program reservation relationship in the program reservation server for the user to inquire and modify. The program reservation server periodically inquires the latest program menu, matches the program reservation relationship and sends a PUSH message to the mobile phone to remind the user to watch the program. Compared with the existing program reservation manner, the present invention needs add a program reservation server and include a program broadcasting reminding engine, program inquiry and matching are implemented at the serving side, and the user is reminded by a PUSH short message. Function of the present invention is very strong and flexible and has good extensibility. For example, a user reserves the program of "World Soccer", and then the user will be reminded to watch it before each show of "World soccer" is broadcast, but if the current show of the program is postponed or cancelled due to a live broadcast, the system can identify it and will not reminded the user mistakenly. For another example, a user reserves a program of "Soccer", and then the user will be reminded for all programs whose names include "Soccer", such as "World Soccer", "Shaolin Soccer" and so on. This reservation is also very efficient for a program that is likely to be broadcast in the future but does not have a specific broadcasting time yet.

Compared with the existing system, the present invention needs to add a program reservation server, and a program reservation module needs to be added to the mobile phone. The program reservation server can share the same physical device with the service guide server. For the existing system, a mobile TV program reservation and program reminding system can be achieved by adding only a few devices and modules. The present invention allows the user to selectively watch programs, provides personalized services for the user, and reduces the waiting time of the user. Moreover, it can also reduce mobile phone battery consumption and elongate stand-by time. For the operators, network utilization and program audience rating can be increased by initially reminding the user to watch recommended programs, and other value added services can be added.

The present invention may have many other examples, and a person having ordinary skill in the art can make various corresponding modifications and transformations according to the present invention without departing from the sprit and essence of the present invention. These corresponding modifications and transformations, however, shall be within the protection scope defined by the attached claims in the present invention.

### Industrial Applicability

Compared with the existing system, the present invention needs to add a program reservation server, and a program reservation module needs to be added to the mobile phone. The program reservation server can share the same physical device with the server guide server. For the existing system, a mobile TV program reservation and program reminding system can be achieved by adding only a few devices and modules. The present invention allows the user to selectively watch programs, provides personalized services for the user, and reduces the waiting time of the user. Moreover, it can also reduce mobile phone battery consumption and elongate stand-by time. For the operators, network utilization and program audience rating can be increased by initially reminding the user to watch recommended programs, and other value added services can be added.

## Claims

1. A mobile TV program management method, comprising the following steps of:
(a) a mobile phone sending a request including a program index set by a user to a program reservation server;
(b) the program reservation server receiving the request, and searching for matched programs in a TV program menu according to the program index set by the user; and
(c) the program reservation server sending a search result to the mobile phone so that the user of the mobile phone can know about program information related with the program index that has been set.

2. The method according to claim 1, wherein the request in said step (a) is a program search request, the program index set by the user is one or more key words, and the program reservation server supports fuzzy inquiry;

3. The method according to claim 2, wherein the method further comprises the following steps after said step (c):
(d) after receiving the search result, the mobile phone selecting from programs in the search result and sending a program reservation request to the program reservation server;
(e) after receiving the program reservation request, the program reservation server sending a reservation success prompting message, and establishing a program reservation record including corresponding relationship between a user identifier and program information reserved by the user, wherein the program information reserved by the user is a program selected by the user from the search result;
(f) the program reservation server matching a TV program related with the program reservation record according to the TV program menu; and
(g) the program reservation server sending a program broadcasting reminding message to the mobile phone with a corresponding user identifier according to the program reservation record before the matched TV program is broadcast.

4. The method according to claim 1, wherein,
the request in said step (a) is a program reservation request, the program index set by the user is one or more key words, and the program reservation server supports fuzzy inquiry;
in said step (c), the program reservation server also sends a reservation information confirmation request to the mobile phone;
the method further comprises the following steps after step (c):
(d) after receiving the reservation information confirmation request, the mobile phone sending a reservation information confirmation message to the program reservation server;
(e) after receiving the reservation information confirmation message, the program reservation server establishing a program reservation record including corresponding relationship between a user identifier and program information reserved by the user, wherein the program information reserved by the user is a program selected by the user from the search result or a program index set by the user;
(f) the program reservation server matching a TV program related with the program reservation record according to the TV program menu; and
(g) the program reservation server sending a program broadcasting reminding message to the mobile phone with a corresponding user identifier according to the program reservation record before the matched TV program is broadcast.

5. The method according to claim 3 or 4, wherein, in said step (e), after the program reservation record is established, the program reservation server inquires and cancels the program reservation record according to the request of the mobile phone.

6. The method according to claim 3 or 4, wherein, said step (f) further comprises the following steps of:
(f1) the program reservation server periodically inquiring a list of programs to be broadcast immediately in the TV program menu;
(f2) the program reservation server inquiring for full scan the program reservation record matched with the list of programs to be broadcast immediately; and
(f3) the program reservation server generating a program broadcasting reminding message in accordance with the matched program reservation record.

7. The method according to claim 6, wherein,
in said step (f3), the generated program broadcasting reminding message is stored in a timed sending table, and the reminding message includes a reminding time which is set by the user or a system.

8. The method according to claim 6, wherein, said step (g) further comprises: (g1) the program reservation server periodically fully scanning the timed sending table and searching out all program reservation records whose reminding times are before the current time; (g2) the program reservation server sending the reminding message to a mobile phone with a corresponding user identifier.

9. The method according to claim 1, wherein, the TV program menu is a latest TV program menu obtained by the program reservation server through periodically visiting a service guide server.

10. A program reservation module used in a mobile TV program management system, wherein the program reservation module is configured to send a request to a reservation relationship management module of a program reservation server, and to receive and display a search result returned by the reservation relationship management module, and the request includes a program index set by a user.

11. The program reservation module according to claim 10, wherein, the request sent by the program reservation module to the reservation relationship management module of the program reservation server is a program search request or a program reservation request; the program reservation request includes reserved program information, which is a program selected by the user from the search result or the program index set by the user; the program reservation module is also used to send a reservation confirmation message to the reservation relationship management module.

12. A program reservation server used in a mobile TV program management system, the program reservation server being disposed at a serving side and comprising a reservation relationship management module, a program broadcasting reminding engine and a message sending module; wherein,
the reservation relationship management module is configured to receive a request sent by the program reservation module, and also configured to send a reservation confirmation request, and establish and store a program reservation record according to reserved program information;
the program broadcasting reminding engine is configured to periodically search for a list of programs to be broadcast immediately, search for through full scan program reservation records in a program reservation management module matched with the list of programs to be broadcast immediately, and generate a program broadcasting reminding message in accordance with the matched program reservation record;
the message sending module is configured to send a reminding message to a mobile phone with a corresponding user identifier.

13. The program reservation module according to claim 10, also used to send a program reservation inquiry or cancellation message to the reservation relationship management module, and to receive and display an inquiry or cancellation result returned by the reservation relationship management module.

14. The reservation relationship management module according to claim 12, also used to receive a program reservation inquiry request sent by the program reservation module, return an inquiry result after inquiring the stored program reservation records, receive a program reservation cancellation request sent by the program reservation module, delete a program reservation record to which the cancellation request is directed and return a cancellation result.

15. The program reservation server according to claim 12, wherein,
the program broadcasting reminding engine is used to store the generated program broadcasting reminding message in a timed sending table of the message sending module, the reminding message including a reminding time which is set by a user or a system;
the message sending module is used to periodically fully scan the timed sending table, search out all program reservation records whose reminding times are before the current time, and send a reminding message to a mobile phone with a corresponding user identifier through a short message center.

16. A mobile phone for use in a mobile TV program management system, comprising the module as described in claim 10 or 11.
